# EUROPEAN PATENT SPECIFICATION

(11) **EP 3 858 709 B1**
(45) Date of publication and mention of the grant of the patent: **03.04.2024**
(21) Application number: 19864840.4
(22) Date of filing: 25.09.2019
(51) Int. Cl.: B62D 7/09, B60G 9/04, B62D 5/04, B62D 7/14, B62D 7/18

(54) **HUB UNIT HAVING STEERING FUNCTION AND VEHICLE PROVIDED WITH HUB UNIT**
NABENEINHEIT MIT LENKFUNKTION UND MIT NABENEINHEIT AUSGESTATTETES FAHRZEUG
UNITÉ MOYEU AVEC FONCTION DE DIRECTION ET VÉHICULE DOTÉ DE L'UNITÉ MOYEU

(30) Priority: 28.09.2018 JP 2018183189
(43) Date of publication of application: 04.08.2021
(73) Proprietor: NTN Corporation, Osaka-shi, Osaka 550-0003 (JP)
(72) Inventor: OHATA, Yusuke, Iwata-shi, Shizuoka 438-8510 (JP); OOBA, Hirokazu, Iwata-shi, Shizuoka 438-8510 (JP); UTSUNOMIYA, Satoshi, Iwata-shi, Shizuoka 438-8510 (JP)
(74) Representative: Maikowski & Ninnemann Patentanwälte Partnerschaft mbB
(86) International application number: PCT/JP2019/037617
(87) International publication number: WO 2020/067166

(56) References cited:
- EP-A1- 3 689 711
- JP-A- 2004 122 932
- JP-A- 2004 122 932
- JP-A- 2017 001 423
- US-A1- 2009 261 550
- Ishihara ET AL: "Hub Bearing with Steering Function that Improves Vehicle Dynamic Performance", JSAE Annual Spring Congress, Society of Automotive Engineers of Japan, 21 May 2018 (2018-05-21), XP055701006, Retrieved from the Internet: URL:https://www.ntnglobal.com/en/products/ review/pdf/NTN_TR86_en_084_090p.pdf [retrieved on 2020-06-04]
- ISHIHARA, NORIO: "Hub Bearing with Integrated Active Front Steering Function that Improves Vehicle Dynamic Performance", Lecture preprints of 2018 JSAE Annual Spring Congress, Society of Automotive Engineers of Japan, 21 May 2018 (2018-05-21), pages 1-6, XP055701006,

## Description

### CROSS REFERENCE TO THE RELATED APPLICATION

This application is based on and claims Convention priority to Japanese patent application No. 2018-183189, filed September 28, 2018.

### BACKGROUND OF THE INVENTION

### (Field of the Invention)

The present invention relates to a hub unit having a steering function (hereinafter referred to as "steering function-equipped hub unit") which is capable of independently steering left and right rear wheels and to a vehicle including the same, as well as to a technology for controlling the left and right rear wheels to an appropriate steering angle according to drive conditions to improve fuel efficiency, and stability and safety of driving.

### (Description of Related Art)

Suspension systems of vehicles such as automobiles can be generally classified into independent suspensions and axle suspensions (also known as rigid axles, including torsion beam suspensions). A rear suspension of a vehicle including a general rear-wheel steering mechanism is constituted as an independent suspension, and the rear suspension can push and pull knuckles to steer rear wheels in a same manner as manual steering of front wheels. However, use of such an independent suspension has a problem that a chassis has a complicated structure, which increases the cost and makes it difficult to secure a large interior space of the vehicle. For this reason, Patent Documents 1, 2 propose examples of rear-wheel steering mechanisms which are applied to suspension systems other than the independent suspensions, such as torsion beam suspensions.

### [Related Document]

### [Patent Document]

[Patent Document 1] JP Laid-open Patent Publication No. 2013-39842
[Patent Document 2] JP Laid-open Patent Publication No. 2005-178653

In a vehicle including a torsion beam suspension, the suspension is mounted to a vehicle body at vehicle-body mount parts of the suspension, which extend frontward from left and right opposite ends of a torsion beam extending in a vehicle widthwise direction, and is provided with left and right hub bearings fastened by bolts to other mount parts of the suspension, which extend rearward from the left and right opposite ends the torsion beam.

The rear-wheel steering mechanisms described in Patent Documents 1, 2 are configured such that an external force is applied to an entire torsion beam so as to deform rubber bushes of vehicle-body mount parts (i.e., front end portions of trailing arm parts) of the torsion beam and thereby steer rear wheels. However, these steering mechanisms cannot independently control the left and right wheels and may not be able to achieve an optimal steering angle because they have small steering angles, the maximum steering angles of which are limited by maximum elastic deformation of the rubber bushes.

The rear-wheel steering mechanism as described in Patent Document 1 is configured to allocate a driving force of a propeller shaft to apply an external force to the torsion beam in a rack-and-pinion system. This rear-wheel steering mechanism cannot be used in a front-engine front-drive (FF) vehicle which does not have a propeller shaft. Further, the mechanism has a complicated structure and thus has a large size, which makes it difficult to secure a large interior space.

In contrast, the rear-wheel steering mechanism as described in Patent Document 2 is used in an electric vehicle and is configured to allocate a driving force of a rear-wheel drive motor and convert the rotary motion into a linear motion to apply an external force to the torsion beam. As with the rear-wheel steering mechanism as described in Patent Document 1, the rear-wheel steering mechanism as described in Patent Document 2 also has a large size, which makes it difficult to secure a large interior space.

Furthermore, JP-Laid open Patent Publication No. 2004-122932 discloses the features of the preambles of the independent claims 1 and 6.

### SUMMARY OF THE INVENTION

An object of the present invention is to provide a steering function-equipped hub unit as well as a vehicle including the same, the hub unit being capable of optimally controlling steering angles of left and right rear wheels in an independent manner while securing a large interior space, irrespective of the suspension type of the rear wheels.

A first aspect of the present invention is a steering function-equipped hub unit configured to steer a rear wheel, the hub unit including:
a hub unit body having a hub bearing configured to support the rear wheel;
a unit support member rotatably supporting the hub unit body about a turning axis extending in a vertical direction, the unit support member being configured to be provided to a rear-wheel suspension which is a rigid axle suspension; and
a steering actuator configured to rotate the hub unit body about the turning axis,
wherein the hub unit body is supported by the unit support member through rolling bearings at mount shaft parts protruding upward and downward, each mount shaft part having a trunnion shaft shape, and
the rolling bearings are configured to be located within a wheel body of the rear wheel and each rolling bearing is configured to be fitted to an outer periphery of the mount shaft part.

Since an independent suspension has a king pin, a steering actuator may be provided which can push and pull a member for turning the rear wheels about the king pin, so that left and right rear wheels can be independently steered. A torsion beam suspension, however, does not have an axis corresponding to the king pin because the suspension has left and right hub bearings fastened by bolts at left and right opposite ends of the torsion beam. Therefore, the left and right rear wheels cannot be independently steered.

In contrast, according to the first aspect, the hub unit body having the hub bearing configured to support the rear wheel can be freely rotated about the turning axis by the steering actuator, and each of the left and right rear wheels can be independently steered by a small angle. In addition, since the unit support member for rotatably supporting the hub unit body is provided to the rear-wheel suspension, the structure can be simplified as compared with the conventional technology which allocates a driving force of a propeller shaft or a motor for driving a rear wheel, so that a large interior space of the vehicle can be secured.

Further, according to the first aspect, the steering angle of the hub unit body can be arbitrarily changed about the turning axis in a certain range by the steering actuator, so that the steering angle of the rear wheel can be arbitrarily corrected according to drive conditions of the vehicle. For example, the steering angles of the rear wheels can be changed so as to be in phase with those of the front wheels in order to suppress yaw generated in the vehicle during steering and to improve the stability of driving. Further, even when the vehicle drives linearly, the stability of driving can be ensured by independently adjusting the steering angles of the left and right rear wheels.

The steering actuator may include: a motor; a reduction gear configured to reduce a speed of rotation of the motor; and a linear motion mechanism configured to convert a rotary output of the reduction gear into a linear motion. In this case, the reduction gear interposed between the motor and the linear motion mechanism makes it possible to increase torque of the rotary input to the linear motion mechanism as well as to reduce the size of the motor.

The linear motion mechanism may be a feed screw mechanism with a trapezoidal screw.

The conventional technology as described above requires constant power input in order to maintain a steering angle because there is no lock mechanism or the like for maintaining the steering angle against a reverse input from a tire.

In contrast, where the linear motion mechanism is a feed screw mechanism with a trapezoidal screw, the effect of preventing a reverse input from a tire can be enhanced. This eliminates the necessity of constantly generating a driving force of the steering actuator to maintain the steering angle, and thus the consumption of electric power or fuel can be reduced.

The hub unit body may be supported by the unit support member through rolling bearings disposed at two locations above and below the hub unit body, and the rolling bearings may be configured to be located within a wheel body of the rear wheel. In this case, the steering function-equipped hub unit having high rigidity and a compact structure can be easily mounted in a vehicle. Thus, the steering function-equipped hub unit can have greater versatility because the hub unit can be easily mounted in an existing vehicle.

A second aspect, not forming part of the present invention, is a steering system including:
the steering function-equipped hub unit according to the first aspect; and
a control device configured to control the steering actuator; wherein the control device includes:
   a steering control section configured to output a current command signal according to a given steering angle command signal; and
   an actuator drive control section configured to output a current (electric current) according to the current command signal inputted from the steering control section to drive and control the steering actuator.

According to the second aspect, the steering control section outputs a current command signal according to a given steering angle command signal, and the actuator drive control section outputs a current according to the current command signal inputted from the steering control section to drive and control the steering actuator. This makes it possible to arbitrarily change the steering angle of the rear wheel, in addition to the steering of the front wheels according to an operation of a steering input section by a driver.

A third aspect of the present invention is a vehicle including the steering function-equipped hub unit according to the first aspect, the hub unit supporting the rear wheel.

According to the third aspect, it is possible to provide a vehicle in which an existing rigid axle suspension for rear wheels is provided with steering function-equipped hub units, without making a significant structural change.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views. In the figures,
Fig. 1 is a longitudinal section view of a steering function-equipped hub unit according to a first embodiment of the present invention and surrounding features;
Fig. 2 is a horizontal section view of the steering function-equipped hub unit and the surrounding features;
Fig. 3 is a perspective view of an external appearance of the steering function-equipped hub unit;
Fig. 4 is a side view of the steering function-equipped hub unit;
Fig. 5 is a plan view of the steering function-equipped hub unit;
Fig. 6 is a sectional view along VI-VI line in Fig. 4;
Fig. 7 is a plan view illustrating an example in which a torsion beam is provided with same steering function-equipped hub units;
Fig. 8 is a perspective view illustrating the example in which the torsion beam is provided with the steering function-equipped hub units; and
Fig. 9 is a schematic plan view of a vehicle including same steering function-equipped hub units.

### DESCRIPTION OF THE EMBODIMENTS

### First Embodiment

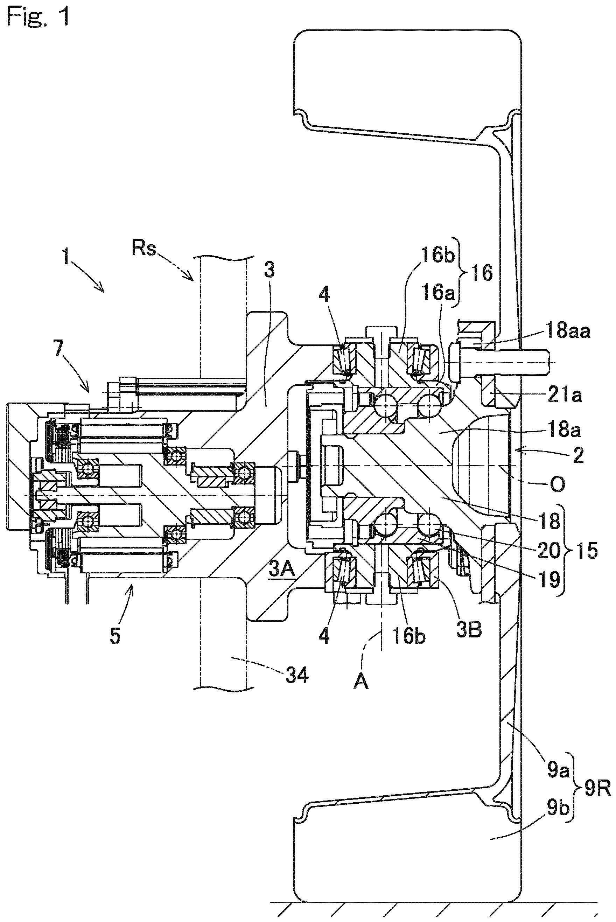

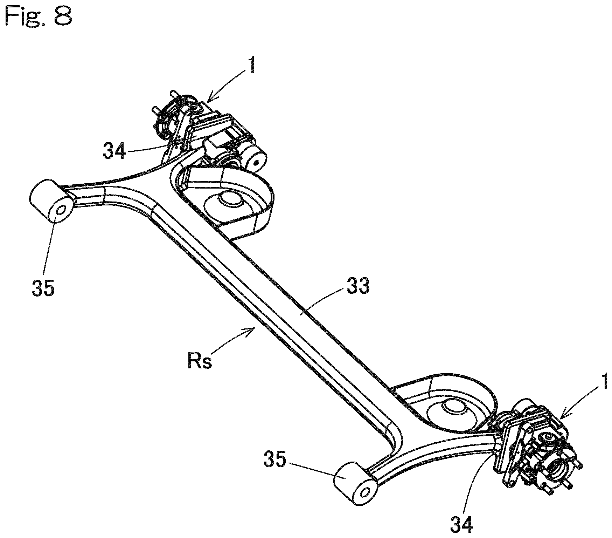

A steering function-equipped hub unit according to a first embodiment of the present invention will be described with reference to Fig. 1 to Fig. 9.

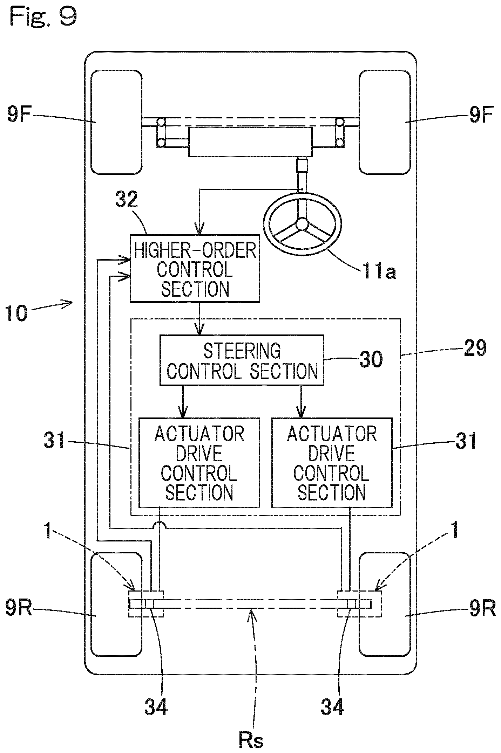

The steering function-equipped hub unit 1 according to the first embodiment has a function of independently steering left and right rear wheels and is applied to each of rear wheels 9R, 9R of a front-wheel steering vehicle (automobile) 10 as shown in Fig. 9.

### Schematic Structure of Steering Function-Equipped Hub Unit 1

As shown in Fig. 1, the steering function-equipped hub unit 1 includes: a hub unit body (also referred to as "turning shaft-equipped hub bearing") 2; a unit support member 3; a rolling bearing 4 which is a rotation-permitting support member; and a steering actuator 5. The unit support member 3 is provided to a rear-wheel suspension which will be described later. In a vehicle including such steering function-equipped hub units 1, left and right rear wheels 9R, 9R (Fig. 9) can be independently steered by a small angle (approximately ± 5 degrees), in addition to steering of left and right front wheels 9F, 9F (Fig. 9) according to an operation of a steering wheel or the like.

The steering actuator 5 is disposed on an inboard side of the unit support member 3, and a hub unit body 2 is disposed on an outboard side of the unit support member 3. The outboard side refers to an outer side, in a vehicle widthwise direction, of a vehicle 10 (Fig. 9) in which the steering function-equipped hub unit 1 is mounted, and the inboard side refers to a center side of the vehicle 10 (Fig. 9) in the vehicle widthwise direction.

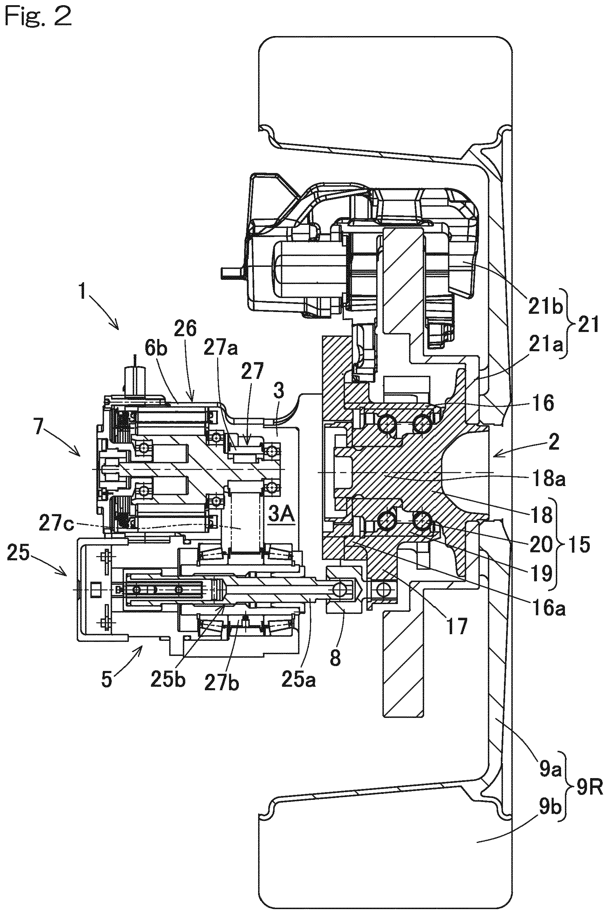

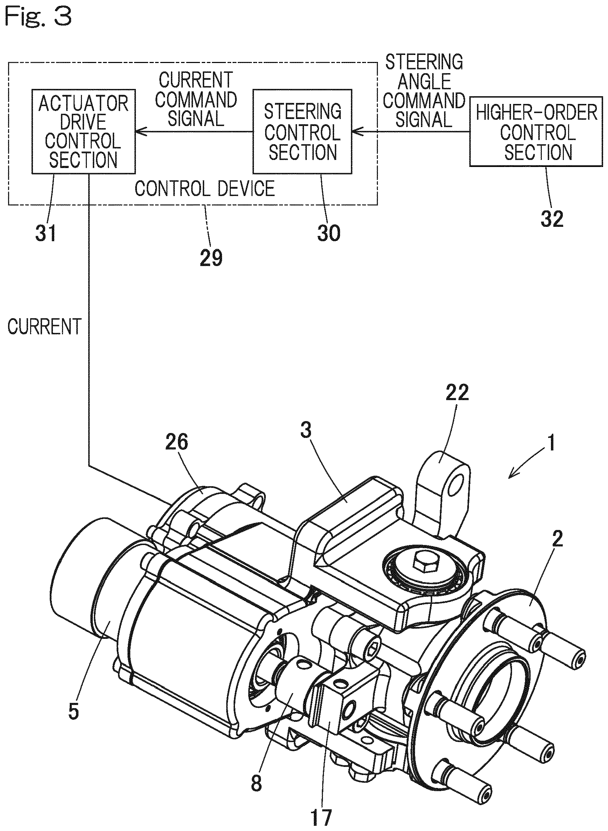

As shown in Fig. 2 and Fig. 3, the hub unit body 2 and the steering actuator 5 are coupled through a joint part 8. The joint part 8 is typically provided with a non-illustrated boot for protection against water and dust.

As shown in Fig. 1, the hub unit body 2 is supported by the unit support member 3 through rolling bearings 4, 4 disposed at two locations above and below the hub unit body such that the hub unit body 2 is rotatable about a turning axis A extending in a vertical direction. The turning axis A is different from a rotation axis O of the rear wheel 9R. The rear wheel 9R includes a wheel body 9a and a tire 9b.

### Installation Location of Steering Function-Equipped Hub Unit 1

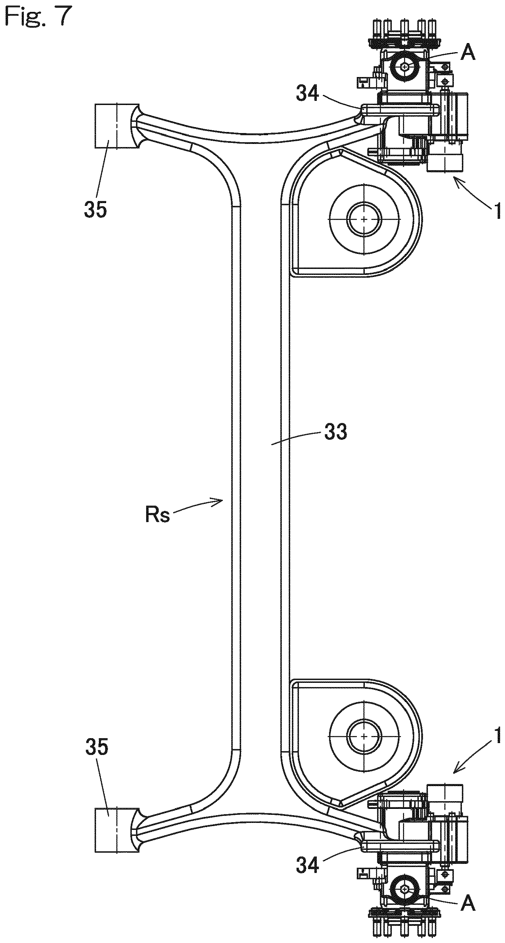

As shown in Fig. 7 to Fig. 9, the steering function-equipped hub unit 1 is fixed to a rigid axle suspension Rs which is a rear-wheel suspension of the vehicle 10. In this example, the rigid axle suspension Rs is a torsion beam suspension. The torsion beam suspension includes: a torsion beam 33 having an H shape in a plan view; and trailing arm parts extending in a longitudinal direction of the vehicle from left and right opposite ends of the torsion beam. The trailing arm parts have hub-unit mount parts 34, 34 at rear end portions thereof. To each of the hub-unit mount parts, the unit support member 3 (Fig. 3) of the steering function-equipped hub unit 1 is fixed. The trailing arm parts also have vehicle-body mount parts 35, 35 at front end portions thereof, and the torsion beam 33 is mounted to the vehicle body at the vehicle-body mount parts. Although not illustrated, the steering function-equipped hub unit 1 may be fixed to a rear-wheel suspension of a different type, such as a multi-link suspension which is classified as an independent suspension.

### Hub Unit Body 2

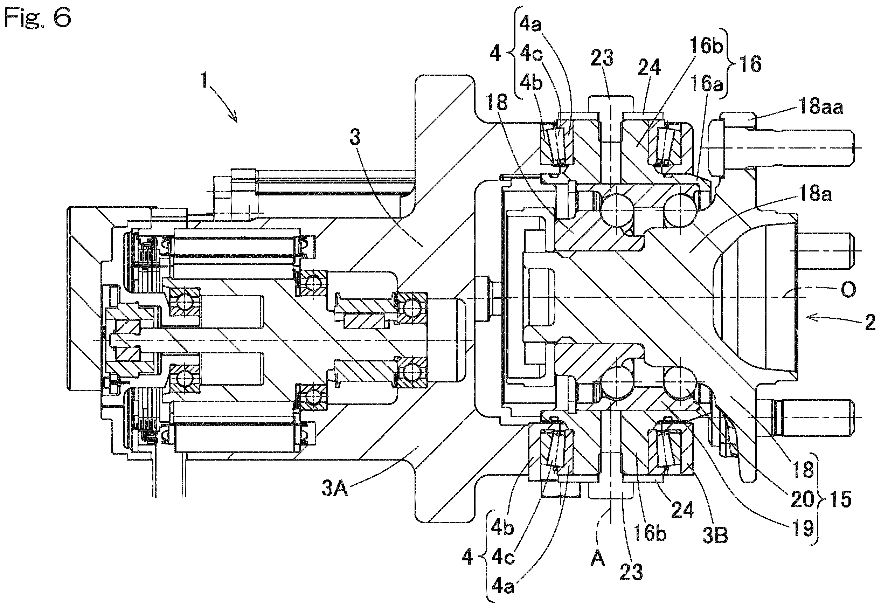

As shown in Fig. 1 and Fig. 6, the hub unit body 2 includes: a hub bearing 15 for supporting the rear wheel 9R; an annular member 16; and an arm part 17 (Fig. 3) which is a steering-force receiving part as described later. The hub bearing 15 includes: an inner ring 18; an outer ring 19; and rolling elements 20, such as balls, interposed between the inner ring 18 and the outer ring 19, and the hub bearing serves to connect a member on a vehicle body side and the rear wheel 9R.

In the illustrated example, the hub bearing 15 is an angular ball bearing including the outer ring 19 as a fixed ring, the inner ring 18 as a rotary ring, and the rolling elements 20 arranged in two rows. The inner ring 18 includes: a hub ring part 18a having a hub flange 18aa and constituting an outboard-side raceway surface; and an inner ring part 18b constituting an inboard-side raceway surface. The wheel body 9a of the rear wheel 9R is fixed to the hub flange 18aa by bolts, with a brake rotor 21a interposed therebetween. The inner ring 18 rotates about the rotation axis O.

The annular member 16 includes: an annular part 16a fitted to an outer peripheral surface of the outer ring 19; and mount shaft parts 16b, 16b protruding upward and downward from an outer periphery of the annular part 16a, each mount shaft part having a trunnion shaft shape. Each mount shaft part 16b is disposed coaxial with the turning axis A and serves as a turning shaft.

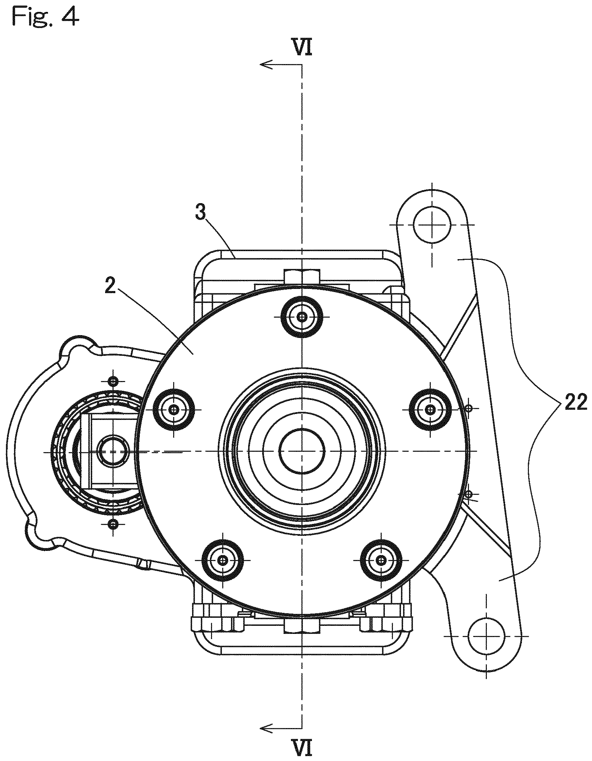

As shown in Fig. 2, a brake 21 includes the brake rotor 21a and a brake caliper 21b. The brake caliper 21b is mounted to brake caliper mount parts 22 (Fig. 4) which are formed integrally with the outer ring 19 so as to protrude in an arm-like manner at two locations above and below.

### Rotation-Permitting Support Member and Unit Support Member

As shown in Fig. 6, each rolling bearing 4 which serves as a rotation-permitting support member is a tapered roller bearing. The rolling bearing 4 includes: an inner ring 4a fitted to an outer periphery of the mount shaft part 16b; an outer ring 4b fitted to the unit support member 3; and a plurality of rolling elements 4c interposed between the inner ring 4a and the outer ring 4b. As shown in Fig. 1, the upper and lower rolling bearings 4, 4 are located within the wheel body 9a.

The unit support member 3 includes a unit support member main body 3A and a unit support member connecting body 3B. As shown in Fig. 6, the unit support member connecting body 3B having a substantially ring shape is removably fixed to an outboard-side end of the unit support member main body 3A. The unit support member connecting body 3B has an inboard-side side surface which has upper and lower parts each formed with a fitting-hole forming part having a partial cylindrical inner surface.

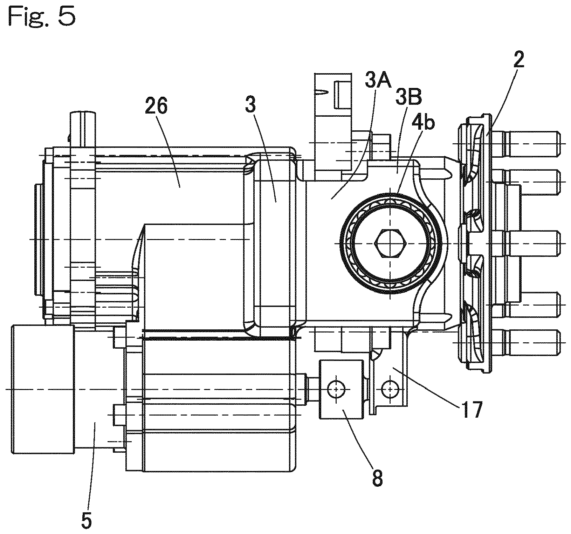

As shown in Fig. 5 and Fig. 6, the unit support member main body 3A has an outboard-side end which also has upper and lower parts each formed with a fitting-hole forming part having a partial cylindrical inner surface. When the unit support member connecting body 3B is fixed to the outboard-side end of the unit support member main body 3A, the fitting-hole forming parts of the unit support member main body 3A and the fitting-hole forming parts of the unit support member connecting body 3B are brought together in the upper and lower parts and define fitting-holes each having a complete circumference. The outer rings 4b are fitted into the respective fitting-holes.

As shown in Fig. 6, each mount shaft part 16b of the annular member 16 is formed with a female thread portion extending in a radial direction of the outer ring, and a bolt 23 is screwed into the female thread portion. With a disk-like pressing member 24 interposed between an end face of the inner ring 4a and the bolt, the bolt 23 screwed into the female thread portion applies a pressing force on the end face of the inner ring 4a so as to apply a preload to the corresponding rolling bearing 4. Thus, the rigidity of each rolling bearing 4 can be improved. An initial preload is set so as to be maintained (not canceled out) even when the weight of the vehicle acts on the hub unit. Therefore, the steering function-equipped hub unit 1 can securely have the rigidity to serve as a steering device. Note that the rolling bearing 4 is not limited to a tapered roller bearing and may be an angular ball bearing depending on conditions of use, such as maximum load. Even in that case, a preload can be applied in the same manner as above.

As shown in Fig. 2, the arm part 17 serves as a point of application of a steering force applied to the outer ring 19 of the hub bearing 15 and is formed integrally with a part of an outer periphery of the outer ring 19 so as to protrude therefrom. The arm part 17 is rotatably coupled to the linear output part 25a of the steering actuator 5 through the joint part 8. Thus, when the linear output part 25a of the steering actuator 5 advances and retracts, the hub unit body 2 is rotated, or steered, about the turning axis A (Fig. 1).

### Steering Actuator 5

The steering actuator 5 as shown in Fig. 3 is configured to rotate the hub unit body 2 about the turning axis A (Fig. 1).

As shown in Fig. 2, the steering actuator 5 includes: a motor 26; a reduction gear 27 configured to reduce a speed of rotation of the motor 26; and a linear motion mechanism 25 configured to convert a forward and reverse rotary output of the reduction gear 27 into a reciprocating linear motion of a linear output part 25a. The motor 26 may be, for example, a permanent magnet synchronous motor, or a direct current motor, or an induction motor.

The reduction gear 27 may be a winding transmission mechanism such as a belt transmission mechanism, or a gear train or the like. In the example of Fig. 2, it is a belt transmission mechanism. The reduction gear 27 includes a driving pulley 27a, a driven pulley 27b, and a belt 27c. The driving pulley 27a is coupled to a motor shaft of the motor 26, and the driven pulley 27b is provided in the linear motion mechanism 25. The driven pulley 27b is disposed parallel to the motor shaft. A driving force of the motor 26 is transmitted from the driving pulley 27a to the driven pulley 27b through the belt 27c. The driving pulley 27a, the driven pulley 27b and the belt 27c constitute the reduction gear 27 of a winding type.

The linear motion mechanism 25 may be a feed screw mechanism such as a sliding screw or a ball screw, or a rack-and-pinion mechanism or the like. In this example, a feed screw mechanism 25b with a trapezoidal sliding screw is used. Since the linear motion mechanism 25 is a feed screw mechanism with a trapezoidal sliding screw, the effect of preventing a reverse input from the tire 9b can be enhanced. The steering actuator 5 including the motor 26, the reduction gear 27 and the linear motion mechanism 25 is assembled as a semi-assembled product and is removably mounted in a casing 6b by bolts or the like. Note that it is also possible to use a mechanism for directly transmitting the driving force of the motor 26 to the linear motion mechanism 25 without involving a reduction gear in the steering actuator.

The casing 6b is integrally formed with the unit support member main body 3A as a part of the unit support member 3. The casing 6b includes: a motor receiving part having a bottomed cylindrical shape and supporting the motor 26; and a linear motion mechanism receiving part supporting the linear motion mechanism 25. The motor receiving part is formed with a fitting hole for supporting the motor 26 at a predetermined position within the casing. The linear motion mechanism receiving part is formed with a fitting hole for supporting the linear motion mechanism 25 at a predetermined position within the casing and a through-hole for allowing the linear output part 25a to advance and retract therethrough.

### Effects and Advantages

According to the steering function-equipped hub unit 1 as described above, the hub unit body 2 having the hub bearing for supporting the rear wheel 9R can be freely rotated about the turning axis A by the steering actuator 5. Thus, the respective left and right rear wheels 9R, 9R can be independently steered by a small angle. In addition, since the rear-wheel suspension is provided with the unit support member 3 for rotatably supporting the hub unit body 2, the structure can be simplified as compared with the conventional technology which allocates a driving force of a propeller shaft or a motor for driving a rear wheel, so that a large interior space of the vehicle 10 can be secured.

Moreover, according to the steering function-equipped hub unit 1, the steering angle of the hub unit body 2 can be arbitrarily changed about the turning axis A in a certain range by the steering actuator 5, so that the steering angle of the rear wheel 9R can be arbitrarily corrected according to drive conditions of the vehicle 10. For example, the steering angles of the rear wheels 9R can be changed so as to be in phase with those of the front wheels 9F in order to suppress yaw generated in the vehicle 10 during steering and to improve the stability of the vehicle 10 while driving curvilinearly. Further, even when the vehicle drives linearly, the stability of the vehicle 10 in driving can be ensured by independently adjusting the steering angles of the left and right rear wheels 9R. In addition, the fuel efficiency can also be improved by suitably setting the steering angles of the rear wheels 9R according to drive conditions at different times.

### Steering System

As shown in Fig. 3, a steering system includes: the steering function-equipped hub unit 1 according to the first embodiment; and a control device 29 configured to control the steering actuator 5. The control device 29 includes a steering control section 30 and an actuator drive control section 31. A driver operates a steering wheel to change turning angles of the front wheels, while a higher-order control section 32 outputs, to the left and right rear wheels 9R, 9R (Fig. 9), a steering angle command signal which is calculated according to an operation angle of a steering input section 11a (Fig. 9), which is the steering wheel, and in consideration of conditions of the vehicle 10 (Fig. 9). The steering control section 30 outputs a current command signal according to the steering angle command signal given from the higher-order control section 32.

The higher-order control section 32 is a control unit superordinate to the steering control section 30. For example, the higher-order control section 32 may be an electric control unit (or a vehicle control unit, abbreviated as VCU) for performing general control of a vehicle. The actuator drive control section 31 outputs a current in accordance with the current command signal inputted from the steering control section 30 to drive and control the steering actuator 5. That is, the actuator drive control section 31 controls the power to be supplied to a coil of the motor 26. For example, the actuator drive control section 31 is constituted by a non-illustrated half-bridge circuit with a switching element and performs PWM control for determining a motor applied voltage according to a ON-OFF duty cycle of the switching element. This makes it possible to change the angle of the hub unit body 2 relative to the unit support member 3 to arbitrarily change the steering angles of the rear wheels. Thus, the steering angles of the rear wheels can be changed according to drive conditions of the vehicle, so that it is possible to drive a vehicle stably and safely with improved motion performance of the vehicle.

In the steering system, the steering actuators 5, 5 may be operated according to a command from a non-illustrated autonomous travel device or operation support device, instead of an operation of the steering wheel by a driver.

Although the present invention has been fully described in connection with the preferred examples thereof with reference to the accompanying drawings, those skilled in the art will readily conceive numerous changes and modifications within the scope of present invention upon reading the present specification. Accordingly, such changes and modifications are to be construed as included in the scope of the present invention as defined in the claims.

### [Reference Numerals]

- 1: Steering function-equipped hub unit
- 2: Hub unit body
- 3: Unit support member
- 4: Rolling bearing
- 5: Steering actuator
- 9a: Wheel body
- 9R: Rear wheel
- 10: Vehicle
- 15: Hub bearing
- 25: Linear motion mechanism
- 25b: Feed screw mechanism
- 26: Motor
- 27: Reduction gear
- 29: Control device
- 30: Steering control section
- 31: Actuator drive control section
- Rs: Rigid axle suspension (rear-wheel suspension)

## Claims

1. A steering function-equipped hub unit configured to steer a rear wheel (9R), the steering function-equipped hub unit (1) comprising:
a hub unit body (2) having a hub bearing (15) configured to support the rear wheel;
a unit support member (3) rotatably supporting the hub unit body about a turning axis (A) extending in a vertical direction, the unit support member being configured to be provided to a rear-wheel suspension which is a rigid axle suspension (Rs); and
a steering actuator (5) configured to rotate the hub unit body about the turning axis,
**characterized in that**
the hub unit body is supported by the unit support member through rolling bearings at mount shaft parts (16b) protruding upward and downward, each mount shaft part having a trunnion shaft shape, and
the rolling bearings are configured to be located within a wheel body (9a) of the rear wheel and each rolling bearing is configured to be fitted to an outer periphery of the mount shaft part.

2. The steering function-equipped hub unit as claimed in claim 1, wherein the steering actuator including:
a motor (26);
a reduction gear (27) configured to reduce a speed of rotation of the motor; and
a linear motion mechanism (25) configured to convert a rotary output of the reduction gear into a linear motion.

3. The steering function-equipped hub unit as claimed in claim 2, wherein the linear motion mechanism is a feed screw mechanism (25b) with a trapezoidal screw.

4. A steering system comprising:
the steering function-equipped hub unit as claimed in any one of claims 1 to 3; and
a control device (29) configured to control the steering actuator; wherein the control device includes:
a steering control section (30) configured to output a current command signal according to a given steering angle command signal; and
an actuator drive control section (31) configured to output a current according to the current command signal inputted from the steering control section to drive and control the steering actuator.

5. A vehicle comprising the steering function-equipped hub unit as claimed in any one of claims 1 to 3, the steering function-equipped hub unit supporting the rear wheel.

6. A turning shaft-equipped hub bearing for a rear wheel (9R), the turning shaft-equipped hub bearing being configured to be mounted to a rear-wheel suspension which is a rigid axle suspension (Rs) and to rotatably support the rear wheel and comprising:
an inner ring (18); an outer ring (19); and rolling elements (20) interposed between the inner ring and the outer ring, **characterized in that**
the turning shaft-equipped hub bearing is configured to be supported by a unit support member (3) through rolling bearings (4) at mount shaft parts (16b) protruding upward and downward, each mount shaft part having a trunnion shaft, so as to be rotatable about a turning axis (A) extending in a vertical direction, and
the rolling bearings are configured to be located within a wheel body (9a) of the rear wheel and each rolling bearing is configured to be fitted to an outer periphery of the mount shaft part.

7. The turning shaft-equipped hub bearing as claimed in claim 6, wherein the rigid axle suspension is a torsion beam suspension.

8. The turning shaft-equipped hub bearing as claimed in any one of claims 6 or 7, wherein the turning shaft-equipped hub bearing has a point of application of a force for rotating the turning shaft-equipped hub bearing about the turning axis.

9. A vehicle comprising the turning shaft-equipped hub bearing as claimed in any one of claims 6 to 8, the turning shaft-equipped hub bearing supporting the rear wheel.

## Patentansprüche

1. Nabeneinheit, die mit einer Lenkfunktion ausgestattet und zum Lenken eines Hinterrads (9R) eingerichtet ist, wobei die Nabeneinheit (1) mit Lenkfunktion aufweist:
einen Nabeneinheitskörper (2) mit einem Nabenlager (15), das zur Lagerung des Hinterrads eingerichtet ist;
ein Einheitsträgerelement (3), das den Nabeneinheitskörper um eine in einer vertikalen Richtung verlaufende Drehachse (A) drehbar lagert, wobei das Einheitsträgerelement derart eingerichtet ist, dass es an einer Hinterradaufhängung bereitgestellt wird, bei der es sich um eine starre Achsaufhängung (Rs) handelt; und
einen Lenkaktuator (5), der eingerichtet ist, den Nabeneinheitskörper um die Drehachse zu drehen,
**dadurch gekennzeichnet, dass**
der Nabeneinheitskörper von dem Einheitsträgerelement über Wälzlager an Montagewellenabschnitten (16b) gelagert wird, die nach oben und nach unten vorstehen, wobei jeder Montagewellenabschnitt eine Zapfenwellenform hat, und
die Wälzlager derart eingerichtet sind, dass sie innerhalb eines Radkörpers (9a) des Hinterrads angeordnet werden, und jedes Wälzlager derart eingerichtet ist, dass es an einem Außenumfang des Montagewellenabschnitts angebracht wird.

2. Nabeneinheit mit Lenkfunktion nach Anspruch 1, wobei der Lenkaktuator aufweist:
einen Motor (26);
ein Untersetzungsgetriebe (27), das eingerichtet ist, eine Drehzahl des Motors zu reduzieren; und
einen Linearbewegungsmechanismus (25), der eingerichtet ist, eine Drehausgangsleistung des Untersetzungsgetriebes in eine Linearbewegung umzuwandeln.

3. Nabeneinheit mit Lenkfunktion nach Anspruch 2, wobei der Linearbewegungsmechanismus ein Vorschubspindelmechanismus (25b) mit einer Trapezgewindespindel ist.

4. Lenksystem, aufweisend:
die Nabeneinheit mit Lenkfunktion nach einem der Ansprüche 1 bis 3; und
eine Steuervorrichtung (29) zum Steuern des Lenkaktuators; wobei die Steuervorrichtung aufweist:
einen Lenksteuerabschnitt (30), der eingerichtet ist, ein Stromsteuersignal entsprechend einem gegebenen Lenkwinkelsteuersignal auszugeben; und
einen Aktuatorantriebssteuerabschnitt (31), der eingerichtet ist, einen Strom gemäß dem Stromsteuersignal auszugeben, das von dem Lenksteuerabschnitt eingegeben wird, um den Lenkaktuator anzutreiben und zu steuern.

5. Fahrzeug mit der Nabeneinheit mit Lenkfunktion nach einem der Ansprüche 1 bis 3, wobei die Nabeneinheit mit Lenkfunktion das Hinterrad lagert.

6. Nabenlager mit Drehwelle für ein Hinterrad (9R), wobei das Nabenlager mit Drehwelle derart eingerichtet ist, dass es an einer Hinterradaufhängung montiert wird, bei der es sich um eine starre Achsaufhängung (Rs) handelt, und das Hinterrad drehbar lagert, und aufweist:
einen Innenring (18); einen Außenring (19); und Wälzkörper (20), die zwischen dem Innenring und dem Außenring angeordnet sind,
**dadurch gekennzeichnet, dass**
das Nabenlager mit Drehwelle eingerichtet ist, von einem Einheitsträgerelement (3) über Wälzlager (4) an Montagewellenabschnitten (16b) gelagert zu werden, die nach oben und nach unten vorstehen, wobei jeder Montagewellenabschnitt eine Zapfenwelle aufweist, so dass er um eine in vertikaler Richtung verlaufende Drehachse (A) drehbar ist, und
die Wälzlager derart eingerichtet sind, dass sie innerhalb eines Radkörpers (9a) des Hinterrads angeordnet werden, und jedes Wälzlager derart eingerichtet ist, dass es an einem Außenumfang der Montagewellenabschnitts angebracht wird.

7. Nabenlager mit Drehwelle nach Anspruch 6, wobei die starre Achsaufhängung eine Torsionsstabaufhängung ist.

8. Nabenlager mit Drehwelle nach einem der Ansprüche 6 oder 7, wobei das Nabenlager mit Drehwelle einen Angriffspunkt für eine Kraft zum Drehen des Nabenlagers mit Drehwelle um die Drehachse aufweist.

9. Fahrzeug mit einem Nabenlager mit Drehwelle nach einem der Ansprüche 6 bis 8, wobei das Nabenlager mit Drehwelle das Hinterrad lagert.

## Revendications

1. Unité de moyeu dotée d'une fonction de direction configurée pour diriger une roue arrière (9R), l'unité de moyeu dotée d'une fonction de direction (1) comprenant :
un corps d'unité de moyeu (2) présentant un palier de moyeu (15) configuré pour supporter la roue arrière ;
un élément de support d'unité (3) supportant de manière rotative le corps d'unité de moyeu autour d'un axe de rotation (A) s'étendant dans une direction verticale, l'élément de support de moyeu étant configuré pour être prévu sur une suspension de roue arrière, laquelle est une suspension d'essieu rigide (Rs) ; et
un actionneur de direction (5) configuré pour tourner le corps d'unité de moyeu autour de l'axe de rotation,
**caractérisée en ce que**
le corps d'unité de moyeu est supporté par l'élément de support d'unité par l'intermédiaire de paliers de roulement sur des parties de tige de montage (16b) faisant saillie vers le haut et vers le bas, chaque partie de tige de montage présentant une forme de tige en tourillon, et
les paliers de roulement sont configurés pour être situés à l'intérieur d'un corps de roue (9a) de la roue arrière et chaque palier de roulement est configuré pour être ajusté sur une périphérie extérieure de la partie de tige de montage.

2. Unité de moyeu dotée d'une fonction de direction selon la revendication 1, dans laquelle l'actionneur de direction comporte :
un moteur (26) ;
un engrenage réducteur (27) configuré pour réduire une vitesse de rotation du moteur ; et
un mécanisme de déplacement linéaire (25) configuré pour convertir une sortie de rotation de l'engrenage de réduction en un déplacement linéaire.

3. Unité de moyeu dotée d'une fonction de direction selon la revendication 2, dans laquelle le mécanisme de déplacement linéaire est un mécanisme de vis d'avance (25b) avec une vis trapézoïdale.

4. Système de direction comprenant :
l'unité de moyeu dotée d'une fonction de direction telle que revendiquée dans l'une quelconque des revendications 1 à 3 ; et
un dispositif de commande (29) configuré pour commander l'actionneur de direction ; dans lequel le dispositif de commande comporte :
une section de commande de direction (30) configurée pour émettre un signal de commande de courant selon un signal de commande d'angle de direction donné ; et
une section de commande d'entraînement d'actionneur (31) configurée pour émettre un courant selon le signal de commande de courant entré depuis la section de commande de direction pour entraîner et commander l'actionneur de commande.

5. Véhicule comprenant l'unité de moyeu dotée d'une fonction de direction telle que revendiquée dans l'une quelconque des revendications 1 à 3, l'unité de moyeu dotée d'une fonction de direction supportant la roue arrière.

6. Palier de moyeu doté d'une tige de rotation pour une roue arrière (9R), le palier de moyeu doté d'une tige de rotation étant configuré pour être monté sur une suspension de roue arrière qui est une suspension d'essieu rigide (Rs) et pour supporter de manière rotative la roue arrière et comprenant :
une bague intérieure (18) ; une bague extérieure (19) ; des éléments de roulement (20) intercalés entre la bague intérieure et la bague extérieure, **caractérisé en ce que**
le palier de moyeu doté d'une tige de rotation est configuré pour être supporté par un élément de support d'unité (3) par l'intermédiaire de paliers de roulement (4) sur des parties de tige de montage (16b) faisant saillie vers le haut et vers le bas, chaque partie de tige de montage présentant une tige en tourillon de manière à pouvoir tourner autour d'un axe de rotation (A) s'étendant dans une direction verticale, et
les paliers de roulement sont configurés pour être situés à l'intérieur d'un corps de roue (9a) de la roue arrière et chaque palier de roulement est configuré pour être ajusté sur une périphérie extérieure de la partie de tige de montage.

7. Palier de moyeu doté d'une tige de rotation selon la revendication 6, dans lequel la suspension d'essieu rigide est une suspension de longeron de torsion.

8. Palier de moyeu doté d'une tige de rotation selon l'une quelconque des revendications 6 ou 7, dans lequel le palier de moyeu doté d'une tige de rotation présente un point d'application d'une force pour faire tourner le palier de moyeu doté d'une tige de rotation autour de l'axe de rotation.

9. Véhicule comprenant le palier de moyeu doté d'une tige de rotation tel que revendiqué dans l'une quelconque des revendications 6 à 8, le palier de moyeu équipé d'une tige de rotation supportant la roue arrière.
